(19) Europäisches Patentamt
European Patent Office
Office européen des brevets

(11) **EP 4 047 560 A1**

(12) **EUROPEAN PATENT APPLICATION**

(43) Date of publication:
**24.08.2022 Bulletin 2022/34**

(21) Application number: **22159077.1**

(22) Date of filing: **28.02.2022**

(51) International Patent Classification (IPC):
*G06V 10/44* (2022.01)    *G06V 10/82* (2022.01)
*G06V 30/244* (2022.01)    *G06V 30/28* (2022.01)

(52) Cooperative Patent Classification (CPC):
**G06V 10/82; G06V 10/454; G06V 30/245;
G06V 30/287**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2021  CN 202111056559**

(71) Applicant: **Beijing Baidu Netcom
Science and Technology Co., Ltd.
Beijing 100085 (CN)**

(72) Inventors:
• **LIU, Jiaming
  BEIJING, 100085 (CN)**
• **TANG, Licheng
  BEIJING, 100085 (CN)**

(74) Representative: **Regimbeau
20, rue de Chazelles
75847 Paris Cedex 17 (FR)**

(54) **TRAINING A FONT GENERATION MODEL AND ESTABLISHING A FONT LIBRARY**

(57)    Provided are a method and apparatus for training a font generation model, a method and apparatus for establishing a font library, and a device. The method for training a font generation model includes the following steps: a source-domain sample character is input into the font generation model to obtain a first target-domain generated character; the first target-domain generated character and a preset target-domain sample character are input into a character classification model to obtain a first feature loss of the font generation model; the first target-domain generated character and the target-domain sample character are input into a font classification model to obtain a second feature loss of the font generation model; a target feature loss is determined according to the first feature loss and/or the second feature loss; and the model parameter of the font generation model is updated according to the target feature loss.

FIG. 1

**Description**

TECHNICAL FIELD

The present disclosure relates to the field of artificial intelligence technology and, in particular, to the field of computer vision and deep learning technology and may be applied to optical character recognition (OCR) and other scenarios.

BACKGROUND

Font generation has been a focus of research by many researchers at home and abroad and has a wide application value in the font design industry. Therefore, how to satisfy the font generation requirement of style diversity has become a key issue in the field of font generation.

SUMMARY

Embodiments of the present disclosure provide a method and apparatus for training a font generation model, a method and apparatus for establishing a font library, and a device, which can improve the ability of the font generation model to learn a font feature and further improve the ability of the font generation model to generate a font-level font.

In a first aspect, the embodiments of the present disclosure provide a method for training a font generation mode. The method includes the steps below.

A source-domain sample character is input into the font generation model to obtain a first target-domain generated character.

The first target-domain generated character and a preset target-domain sample character are input into a character classification model to obtain a first feature loss of the font generation model.

The first target-domain generated character and the target-domain sample character are input into a font classification model to obtain a second feature loss of the font generation model.

A target feature loss is determined according to the first feature loss and/or the second feature loss.

The model parameter of the font generation model is updated according to the target feature loss.

In a second aspect, the embodiments of the present disclosure provide a method for establishing a font library. The method includes the steps below.

A target source-domain input character is input into the font generation model to obtain a target-domain new character.

The font library is established based on the target-domain new character.

The font generation model is obtained by being trained using the method for training a font generation model described in the first aspect.

In a third aspect, the embodiments of the present disclosure provide an apparatus for training a font generation mode. The apparatus includes a first target-domain generated character acquisition module, a first feature loss acquisition module, a second feature loss acquisition module, a target feature loss acquisition module, and a first model parameter update module.

The first target-domain generated character acquisition module is configured to input a source-domain sample character into the font generation model to obtain a first target-domain generated character.

The first feature loss acquisition module is configured to input the first target-domain generated character and a preset target-domain sample character into a character classification model to obtain a first feature loss of the font generation model.

The second feature loss acquisition module is configured to input the first target-domain generated character and the target-domain sample character into the font classification model to obtain a second feature loss of the font generation model.

The target feature loss acquisition module is configured to determine a target feature loss according to the first feature loss and/or the second feature loss.

The first model parameter update module is configured to update the model parameter of the font generation model according to the target feature loss.

In a fourth aspect, the embodiments of the present disclosure provide an apparatus for establishing a font library. The apparatus includes a target-domain new character acquisition module and a font library establishment module.

The target-domain new character acquisition module is configured to input a target source-domain input character into the font generation model to obtain a target-domain new character.

The font library establishment module is configured to establish the font library based on the target-domain new character.

The font generation model is obtained by being trained using the apparatus for training a font generation model described in the third aspect.

In a fifth aspect, the embodiments of the present disclosure provide an electronic device. The electronic device includes at least one processor and a memory communicatively connected to at least one processor.

The memory stores an instruction executable by the processor to enable the processor to execute the method for training a font generation model according to the embodiments in the first aspect or execute the method for establishing a font library according to the embodiments in the second aspect.

In a sixth aspect, the embodiments of the present disclosure further provide a non-transitory computer-readable storage medium storing a computer instruction to enable the computer to execute the method for training a font generation model according to the embodiments in the first aspect or execute the method for establishing a font library according to the embodiments in the second aspect.

In a seventh aspect, the embodiments of the present disclosure provide a computer program product. The computer program product includes a computer program which, when executed by a processor, causes the processor to perform the method for training a font generation model according to the embodiments in the first aspect or perform the method for establishing a font library according to the embodiments in the second aspect.

In the embodiments of the present disclosure, the source-domain sample character is input into the font generation model to obtain the first target-domain generated character, and the first target-domain generated character and the preset target-domain sample character are input into the character classification model and the font classification model respectively to obtain the first feature loss and the second feature loss of the font generation model. Then, the model parameter of the font generation model is updated according to the target feature loss determined according to the first feature loss and/or the second feature loss to perform the training of the font generation model. After the training of the font generation model is completed, the target source-domain input character may be input into the font generation model to obtain the target-domain new character, and the font library is established based on the target-domain new character. Thus, the problem that the existing font generation model is difficult to generate a font-level font is solved. In this manner, the ability of the font generation model to learn a font feature can be improved, and thus the ability of the font generation model to generate a font-level font can be improved.

It is to be understood that the content described in this part is neither intended to identify key or important features of the embodiments of the present disclosure nor intended to limit the scope of the present disclosure. Other features of the present disclosure are apparent from the description provided hereinafter.

BRIEF DESCRIPTION OF DRAWINGS

The drawings are intended to provide a better understanding of the solution and not to limit the present disclosure.

FIG. 1 is a flowchart of a method for training a font generation model according to an embodiment of the present disclosure.

FIG. 2 is a flowchart of a method for training a font generation model according to an embodiment of the present disclosure.

FIG. 3 is a principle diagram of the network structure of a font generation model according to an embodiment of the present disclosure.

FIG. 4 is a principle diagram of the network structure of a font generation model according to an embodiment of the present disclosure.

FIGS. 5A-5B are diagrams illustrating the visual effect of a first feature loss according to an embodiment of the present disclosure.

FIGS. 6A-6B are diagrams illustrating the visual effect of a second feature loss according to an embodiment of the present disclosure.

FIGS. 7A-7B are diagrams illustrating the visual effect of a second feature loss according to an embodiment of the present disclosure.

FIG. 8 is a principle diagram of a method for training a font generation model according to an embodiment of the present disclosure.

FIGS. 9A-9B are comparison diagrams illustrating the effect of a font generation model that is obtained by being trained using a character loss according to an embodiment of the present disclosure.

FIGS. 10A-10C are comparison diagrams illustrating the effect of a font generation model that is obtained by being trained using a first feature loss according to an embodiment of the present disclosure.

FIGS. 11A-11C are comparison diagrams illustrating the effect of a font generation model that is obtained by being trained using a second feature loss according to an embodiment of the present disclosure.

FIG. 12 is a flowchart of a method for establishing a font library according to an embodiment of the present disclosure.

FIG. 13 is a diagram illustrating the structure of an apparatus for training a font generation model according to an embodiment of the present disclosure.

FIG. 14 is a diagram illustrating the structure of an apparatus for establishing a font library according to an embodiment of the present disclosure.

FIG. 15 is a diagram illustrating the structure of an electronic device for performing a method for training a font generation model or a method for establishing a font library according to an embodiment of the present disclosure.

DETAILED DESCRIPTION

Exemplary embodiments of the present disclosure, including details of embodiments of the present disclosure, are described hereinafter in conjunction with the drawings to facilitate understanding. The exemplary embodiments are merely illustrative. Therefore, it is to be appreciated by those of ordinary skill in the art that various changes and modifications may be made to the embodiments described herein without departing from the scope of the present disclosure. Similarly, description of well-known functions and constructions is omitted hereinafter for clarity and conciseness.

Font generation is an emerging task in the field of image style transfer. The image style transfer refers to the conversion of an image into an image of another style while the content is kept unchanged. The image style transfer is a popular research direction in a deep learning application.

At present, a generative adversarial network (GAN) model may be adopted to perform the font generation. However, in a font generation scheme based on the GAN model, through the network trained with a relatively small data volume, only some relatively weak features, such as tilt, size and part of strokes, can be learned, while the most user-style features cannot be learned. The network trained with a relatively large data volume may also be used. Although this network is relatively strong in style, an incorrect character is easy to generate for a Chinese character outside a training set. According to these mainstream research results, a font-level effect is difficult to achieve.

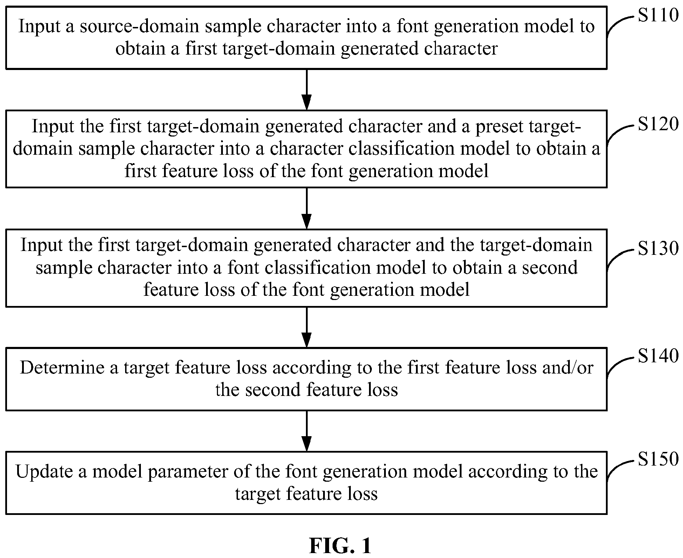

In an example, FIG. 1 is a flowchart of a method for training a font generation model according to an embodiment of the present disclosure. This embodiment may be applied to a case where the font generation model is optimized according to various types of feature loss training. The method may be executed by an apparatus for training a font generation model. The apparatus may be performed by software and/or hardware and may generally be integrated in an electronic device. The electronic device may be a terminal device or a server device. The type of the electronic device that performs the method for training a font generation model is not limited in the embodiments of the present disclosure. Accordingly, as shown in FIG. 1, the method includes the operations below.

In S110, a source-domain sample character is input into the font generation model to obtain a first target-domain generated character.

In an optional embodiment of the present disclosure, the source-domain sample character may be an image having a target source-domain font style. The target source-domain may be a certain source-domain font style. The source-domain font style may be a regular real font such as regular script, Song, or bold. That is, the target source-domain may be any real font style such as regular script, Song, bold, or other regular real fonts. The first target-domain generated character may be an image having a target-domain font style. The target-domain font style may be a style type that needs to be generated, such as a user's handwritten font or other artistic fonts. The font generation model may generate a font having the target-domain font style.

In this embodiment of the present disclosure, when the font generation model is trained, a type of source-domain sample character may be first input into the font generation model. The font generation model may output the first target-domain generated character corresponding to the source-domain sample character according to the input source-domain sample character.

For example, an image including a Chinese character "做" in regular script may be used as the source-domain sample character and input into the font generation model. The font generation model may output an image including a user's handwritten Chinese character "做".

In S120, the first target-domain generated character and a preset target-domain sample character are input into a character classification model to obtain a first feature loss of the font generation model.

In an optional embodiment of the present disclosure, the target-domain sample character may be an image having the target-domain font style. For example, the first target-domain generated character is the image that includes the handwritten Chinese character "做" and is generated by the font generation model. The target-domain sample character is a real image including a handwritten Chinese character "做". The real image including the handwritten Chinese character "做" may be an image generated by a real user's handwritten Chinese character. The image generated by the real user's handwritten Chinese character may be obtained from a public data set or obtained upon user authorization.

The character classification model may be a model that refines the accuracy of the first target-domain generated character from the character aspect. Optionally, the character classification model may be obtained by being trained using an oxford visual geometry group (VGG) 19 network. The training samples of the character classification model may be images including multiple fonts. For example, the training samples may be about 450,000 images including more than 80 fonts and more than 6,700 characters. The first feature loss may be a difference feature calculated and obtained by the character classification model according to the first target-domain generated character and the target-domain sample character. The first feature loss can supervise the font generation model to learn more font details.

To further improve the learning ability of the font generation model for the font feature of the first target-domain generated character, in the process of training the font generation model, after the font generation model generates the first target-domain generated character, the first target-domain generated character may be input into the character classification model, so that the first feature loss of the font generation model is calculated by the character classification model according to the first target-domain generated character and the preset target-domain sample character.

In S130, the first target-domain generated character and the target-domain sample character are input into a font classification model to obtain a second feature loss of the font generation model.

The font classification model may be a model that refines the accuracy of the first target-domain generated character from the font aspect. Optionally, the font classification model may also be obtained by being trained using the VGG19 network. The training samples of the font classification model may be images including multiple fonts. For example, the training sample may be about 450,000 images including more than 80 fonts and more than 6,700 characters. The second feature loss may be a difference feature calculated and obtained by the font classification model according to the first target-domain generated character and the target-domain sample character. The second feature loss can supervise the font generation model to learn more font details.

It is to be noted that although the model structure of the character classification model and the model structure of the font classification model are the same, the model parameter and the model function of the character classification model and the model parameter and the model function of the font classification model are different. Specifically, this is because sample data for training the character classification model is different from sample data for training the font classification model. In the sample data for training the character classification model, the character type of a sample character needs to be marked, while in the sample data for training the font classification model, the font type of the sample character needs to be marked. That is, the character classification model is configured to distinguish the character, and the font classification model is configured to distinguish the font. Therefore, the first feature loss calculated by the character classification model can measure the ability of the font generation model to learn the font details in the character aspect, for example, with the first feature loss, whether the character feature of the first target-domain generated character matches the character feature of the user's handwritten character is determined. The second feature loss calculated by the font classification model can measure the ability of the font generation model to learn the font details in the font aspect. For example, with the second feature loss, whether the font type of the first target-domain generated character conforms to the font type of the user's handwritten character is determined. Thus, the first feature loss and the second feature loss can measure the ability of the font generation model to learn font details from the two aspects of character and font.

It is to be noted that FIG. 1 is merely a diagram illustrating the effect of an implementation. An execution order between step S120 and step S130 is not limited in this embodiment of the present disclosure. That is, step S120 may be performed before step S130. Alternatively, step S130 may be performed before step S120. Alternatively, step S120 and step S130 may also be performed simultaneously.

In S140, a target feature loss is determined according to the first feature loss and/or the second feature loss.

The target feature loss may be a feature loss configured to simply train the font generation model.

In this embodiment of the present disclosure, after the first feature value and the second feature loss are obtained, the target feature loss may be further determined according to the first feature loss and/or the second feature loss.

For example, the first feature loss may be determined as the target feature loss, or the second feature loss may be determined as the target feature loss. Alternatively, the first feature value and the second feature loss may also be determined as the target feature loss at the same time. The determination method of the target feature loss is not limited in the embodiments of the present disclosure.

In S150, the model parameter of the font generation model is updated according to the target feature loss.

The model parameter may be, for example, the relevant parameter of the font generation model such as weight or bias. The type of the model parameter is not limited in the embodiments of the present disclosure.

Accordingly, after the target feature loss is determined, the model parameter of the font generation model is updated according to the target feature loss to perform the supervision and training of the font generation model. For the target feature loss, many different types of feature loss may be considered. Therefore, the ability of the font generation model to learn the font details can be continuously optimized by updating the model parameter of the font generation model according to the target feature loss, and thus the ability of the font generation model to generate a font-level font can be improved.

In this embodiment of the present disclosure, the source-domain sample character is input into the font generation model to obtain the first target-domain generated character, and the first target-domain generated character and the preset target-domain sample character are input into the character classification model and the font classification model respectively to obtain the first feature loss and the second feature loss of the font generation model. Then, the model parameter of the font generation model is updated according to the target feature loss determined according to the first feature loss and/or the second feature loss to perform the training of the font generation model. After the training of the font generation model is completed, the target source-domain input character may be input into the font generation model to obtain a target-domain new character, and the font library is established based on the target-domain new character. Thus, the problem that the existing font generation model is difficult to generate a font-level font is solved. In this manner, the ability of the font generation model to learn a font feature can be improved, and thus the ability of the font generation model to generate a font-level font can be improved.

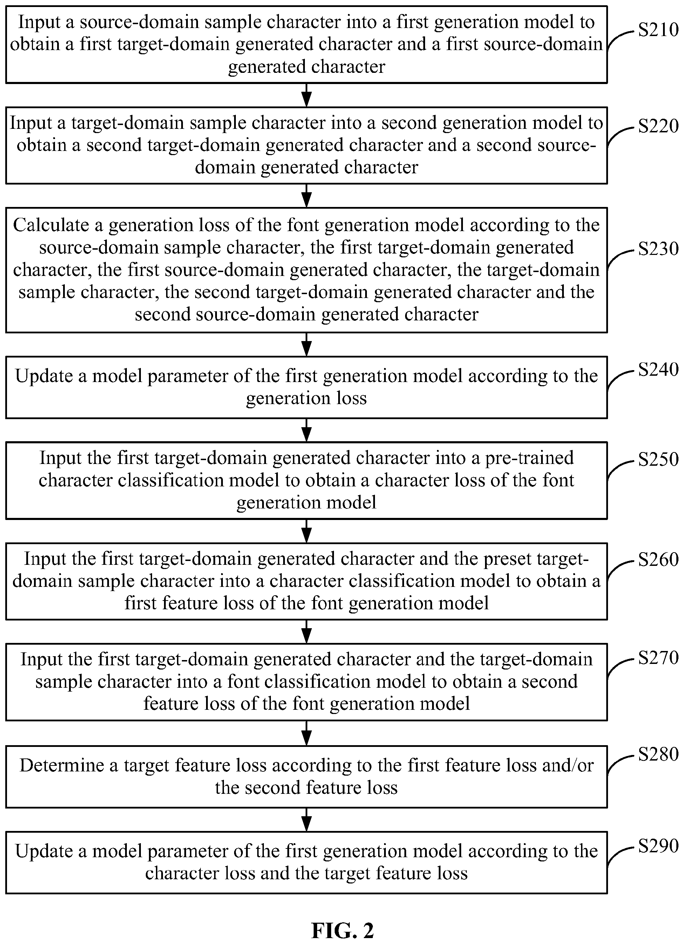

In an example, FIG. 2 is a flowchart of a method for training a font generation model according to an embodiment of the present disclosure. This embodiment of the present disclosure is an optimization and improvement on the basis of the technical schemes of the preceding embodiment and provides multiple optional specific implementations for inputting the source-domain sample character into the font generation model to obtain the first target-domain generated character; obtaining the first feature loss and a second feature loss are obtained; and updating the model parameter of the font generation model.

As shown in FIG. 2, the method for training a font generation model includes the steps below.

In S210, the source-domain sample character is input into a first generation model to obtain the first target-domain generated character and a first source-domain generated character.

The font generation model is a cyclic network generation model and includes the first generation model and a second generation model. The first source-domain generated character may be an image that has a source-domain font style and is generated by the font generation model according to the source-domain sample character.

In S220, a target-domain sample character is input into the second generation model to obtain a second target-domain generated character and a second source-domain generated character.

The second target-domain generated character may be an image that has a target-domain font style and is generated by the font generation model. The second source-domain generated character may be an image that has the source-domain font style and is generated by the font generation model according to the target-domain sample character.

In S230, a generation loss of the font generation model is calculated according to the source-domain sample character, the first target-domain generated character, the first source-domain generated character, the target-domain sample character, the second target-domain generated character and the second source-domain generated character.

The generation loss may be the loss of the generation model of the font generation model.

In S240, the model parameter of the first generation model is updated according to the generation loss.

In the embodiments of the present disclosure, optionally, the font generation model may include a first generation model, a second generation model, a first discrimination model and a second discrimination model.

In S250, the first target-domain generated character is input into a pre-trained character classification model to obtain a character loss of the font generation model.

The character loss may be an incorrect character loss obtained by calculating the first target-domain generated character through the character classification model and can constrain the incorrect character rate of the first target-domain generated character output by the cyclic network generation model.

To reduce the incorrect character rate of the font generation model, in addition to using the generation loss of the font generation model to train the font generation model, after the self-training of the font generation model is completed, the pre-trained character classification model may also be configured to supervise the training process of the font generation model. Specifically, the first target-domain generated character generated by the font generation model is input into the pre-trained character classification model to obtain the character loss of the font generation model.

In an optional embodiment of the present disclosure, that the first target-domain generated character is input into the pre-trained character classification model to obtain the character loss of the font generation model may include inputting the first target-domain generated character into the character classification model to obtain a generated-character vector of the first target-domain generated character; and calculating the character loss according to a difference between the generated-character vector and a preset standard character vector.

Specifically, the first target-domain generated character may be input into the preceding character classification model. The preceding character classification model may output the generated-character vector $\overline{X} = [x_0, x_1 \ldots \ldots x_i \ldots \ldots x_n]$ of the first target-domain generated character. A standard character vector $\overline{Y} = [y_0, y_1 \ldots \ldots y_i \ldots \ldots y_n]$ is preset for the preceding first target-domain generated character. $x_i$ denotes an element with a subscript i in the generated-character vector. $y_i$ denotes an element with a subscript i in the standard character vector. i denotes an integer greater than or equal to 0 and less than or equal to n. n denotes the number of elements in the generated-character vector $\overline{X}$ and the standard character vector $\overline{Y}$.

The character loss of the font generation model may be determined according to the difference between the standard character vector $\overline{Y}$ and the generated-character vector $\overline{X}$ of first target-domain generated character.

The first target-domain generated character is input into the character classification model, and the generated-character vector $\overline{X} = [x_0, x_1 \ldots \ldots x_i \ldots \ldots x_n]$ of the first target-domain generated character may be obtained. Each element in the vector $\overline{X}$ may denote one character in the training sample. n denotes the number of characters in the training sample. For example, when the training sample has 6,761 characters, n may be equal to 6,760.

The standard character vector $\overline{Y} = [y_0, y_1 \ldots \ldots y_i \ldots \ldots y_n]$ is preset for the preceding first target-domain generated character. Each element in the vector $\overline{Y}$ may denote one character in the training sample. n denotes the number of characters in the training sample. For example, when the training sample has 6,761 characters, n may be equal to 6,760.

The standard character vector $\overline{Y}$ denotes the vector that should be output by the preceding character classification model when the first target-domain generated character is input into the preceding character classification model.

For example, the first target-domain generated character is a Chinese character "做", and the Chinese character "做" is the first character of the n characters in the training sample. Thus, the standard character vector of the Chinese character "做" may be denoted as $\breve{Y} = [1, 0, 0, \ldots \ldots 0]$.

In an optional embodiment of the present disclosure, the calculation of the character loss may include calculating the character loss according to the following formula:

$$LC = -\sum_0^n x_i \log y_i$$

LC denotes the character loss. $x_i$ denotes an element with a subscript i in the generated-character vector. $y_i$ denotes an element with a subscript i in the standard character vector. i denotes an integer greater than or equal to 0 and less than or equal to n. n denotes the number of elements in the generated-character vector and in the standard character vector.

In the preceding technical schemes, the character loss of the font generation model is calculated to constrain the incorrect character rate of the first target-domain generated character output by the font generation model. Thus, the probability of generating an incorrect character by the font generation model generates is reduced, and the accuracy of the font generation model is improved.

In S260, the first target-domain generated character and a preset target-domain sample character are input into a character classification model to obtain the first feature loss of the font generation model.

In an optional embodiment of the present disclosure, the character classification model includes a plurality of feature layers. That the first target-domain generated character and the preset target-domain sample character are input into the character classification model to obtain the first feature loss of the font generation model may include the following. The first target-domain generated character is input into the character classification model to obtain a first generated-character feature map output by each feature layer of the character classification model. The target-domain sample character is input into the character classification model to obtain a first sample character feature map output by each feature layer of the character classification model. A difference between the first generated-character feature map of a target feature layer and the first sample character feature map of the target feature layer is calculated to obtain the first feature loss.

In an optional embodiment of the present disclosure, that the difference between the first generated-character feature map of the target feature layer and the first sample character feature map of the target feature layer is calculated may include the following. A pixel difference between the first generated-character feature map of the target feature layer and the first sample character feature map of the target feature layer is calculated to obtain a first pixel loss of the target feature layer. The first feature loss is calculated according to the first pixel loss of the target feature layer.

The first generated-character feature map may be the feature map of a generated character output by each feature layer of the character classification model. The first sample character feature map may be the feature map of a sample character output by each feature layer of the character classification model.

In this embodiment of the present disclosure, the character classification model may include a plurality of feature layers (for example, 90 feature layers). The first target-domain generated character is input into the character classification model to obtain the first generated-character feature map output by each layer. The target-domain sample character is input into the character classification model to obtain the first sample character feature map output by each layer.

The first feature loss of each feature layer may be determined according to the difference between the first generated-character feature map and the first sample character feature map output by the each feature layer. For example, in each feature layer, a difference is made between the pixel value of each pixel in the first generated-character feature map output by the feature layer and the pixel value of the corresponding pixel in the first sample character feature map output by the feature layer, and the absolute value of the difference is calculated. In this manner, the difference of each pixel is obtained. The differences between all pixels in the first generated-character feature map and the corresponding pixels in the first sample character feature map are summed to obtain the pixel loss of the feature layer.

Optionally, at least one of the plurality of feature layers (for example, a 45th layer and a 46th layer) may be selected as the target feature layer, and the sum of the feature losses of all target feature layers is selected as the overall first feature loss.

The preceding overall feature loss may be configured to represent that the font generation model learns features with relatively large differences between the first target-domain generated character and the target-domain sample character. Therefore, the font generation model can learn more font details in the character aspect, and the ability of the font generation model to learn a font feature can be improved.

In an optional embodiment of the present disclosure, that the pixel difference between the first generated-character feature map of the target feature layer and the first sample character feature map of the target feature layer is calculated may include the following. An absolute value of a difference value between the pixel value of a pixel at each position in the first generated-character feature map and the pixel value of a pixel at the corresponding position in the first sample character feature map is calculated to obtain a difference between the pixel at the each position in the first generated-character feature map and the pixel at the corresponding position in the first sample character feature map. The pixel difference between the first generated-character feature map and the first sample character feature map is determined according to differences between pixels at a plurality of positions in the first generated-character feature map and pixels at corresponding positions in the first sample character feature map.

In S270, the first target-domain generated character and the target-domain sample character are input into a font classification model to obtain the second feature loss of the font generation model.

In an optional embodiment of the present disclosure, the font classification model includes a plurality of feature layers. That the first target-domain generated character and the target-domain sample character are input into the font classification model to obtain the second feature loss of the font generation model may include the following. The first target-domain generated character is input into the font classification model to obtain a second generated-character feature map output by each feature layer of the font classification model. The target-domain sample character is input into the font classification model to obtain a second sample character feature map output by each feature layer of the font classification model. A difference between the second generated-character feature map of a target feature layer and the second sample character feature map of the target feature layer is calculated to obtain the second feature loss.

In an optional embodiment of the present disclosure, that the difference between the second generated-character feature map of the target feature layer and the second sample character feature map of the target feature layer is calculated may include the following. A pixel difference between the second generated-character feature map of the target feature layer and the second sample character feature map of the target feature layer is calculated to obtain a second pixel loss of the target feature layer. The second feature loss is calculated according to the second pixel loss of the target feature layer.

The second generated-character feature map may be a feature map of the generated character output by each feature layer of the font classification model. The second sample character feature map may be a feature map of the sample character output by each feature layer of the font classification model.

In this embodiment of the present disclosure, the font classification model may uniformly include a plurality of feature layers (for example, 90 feature layers). The first target-domain generated character is input into the font classification model to obtain the second generated-character feature map output by each layer. The target-domain sample character is input into the font classification model to obtain the second sample character feature map output by each layer.

The second feature loss of each feature layer may be determined according to the difference between the second generated-character feature map and the second sample character feature map output by the each feature layer. For example, in each feature layer, a difference is made between the pixel value of each pixel in the second generated-character feature map output by the feature layer and the pixel value of the corresponding pixel in the second sample character feature map output by the feature layer, and an absolute value of the difference is calculated. In this manner, the difference of each pixel is obtained. The differences of all pixels in the second generated-character feature map and the corresponding pixels in the second sample character feature map are summed to obtain the pixel loss of the feature layer.

Optionally, at least one of the plurality of feature layers (for example, a 45th layer and a 46th layer) may be selected as the target feature layer, and the sum of the feature losses of all target feature layers is selected as the overall second feature loss.

The preceding overall feature loss may be configured to represent that the font generation model learns features with relatively large differences between the first target-domain generated character and the target-domain sample character. Therefore, the font generation model can learn more font details in the font aspect, and the ability of the font generation model to learn the font feature can be improved.

In an optional embodiment of the present disclosure, that the pixel difference between the second generated-character feature map of the target feature layer and the second sample character feature map of the target feature layer is calculated may include the following. The absolute value of the difference value between the pixel value of the pixel at each position in the second generated-character feature map and the pixel value of the pixel at the corresponding position in the second sample character feature map is calculated to obtain the difference between the pixel at each position in the second generated-character feature map and the pixel at the corresponding position in the second sample character feature map. The pixel difference between the second generated-character feature map and the second sample character feature map is determined according to differences between pixels at a plurality of positions in the second generated-character feature map and pixels at corresponding positions in the second sample character feature map.

In S280, a target feature loss is determined according to the first feature loss and/or the second feature loss.

In S290, the model parameter of the first generation model is updated according to the character loss and the target feature loss.

In this embodiment of the present disclosure, after the self-training of the font generation model is completed by using the generation loss, the character classification model may be configured to calculate the character loss and the first feature loss of the font generation model respectively, and the font classification model may be configured to calculate the second feature loss of the font generation model, so that the target feature loss is determined according to the first feature loss and/or the second feature loss. Finally, the model parameter of the first generation model of the font generation model is updated according to the character loss and the target feature loss to continue to supervise and train the font generation model. Optionally, updating the model parameter of the first generation model in the font generation model according to the character loss and the target feature loss may be that the model parameter of the first generation model of the font generation model is updated according to the sum of the character loss and the target feature loss.

It is to be noted that FIG. 2 is merely a diagram of an implementation. There is no execution order between step S250 and steps S260 to S280. Step S250 may be performed before steps S260 to S280. Alternatively, steps S260 to S280 may be performed before step S250. Alternatively, these operations may also be performed simultaneously. There is also no execution order between step S260 and step S270.

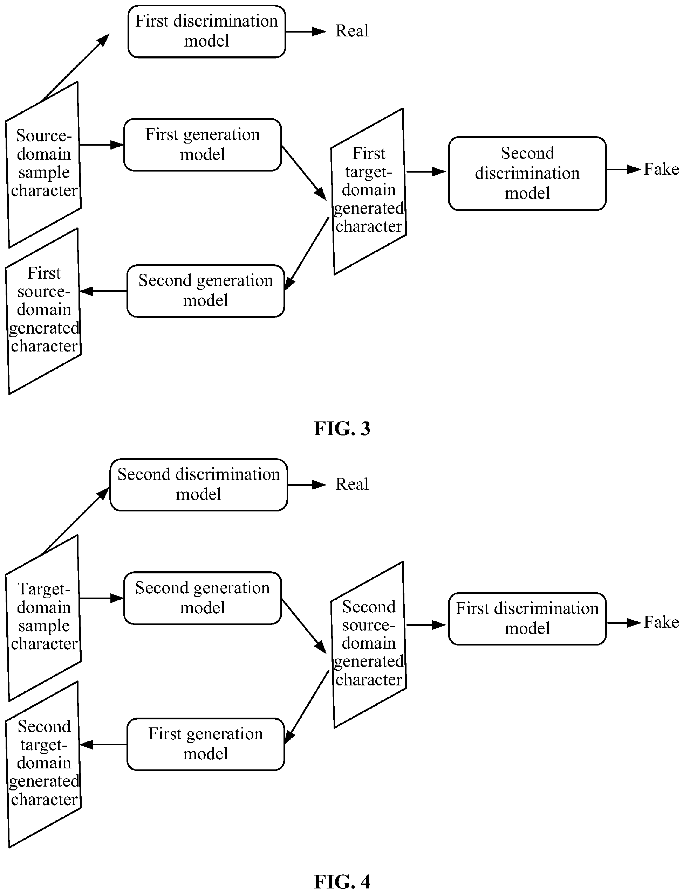

FIGS. 3 and 4 are principle diagrams illustrating the network structure of a font generation model according to an embodiment of the present disclosure. In a specific example, as shown in FIGS. 3 and 4, in the embodiments of the present disclosure, the font generation model may include a first generation model, a second generation model, a first discrimination model and a second discrimination model. The first generation model is configured to convert an image having the source-domain font style into an image having the target-domain font style. The second generation model is configured to convert an image having the target-domain font style into an image having the source-domain font style. The first discrimination model is configured to discriminate whether the converted image is in the source-domain font style. The second discrimination model is configured to discriminate whether the converted image is in the target-domain font style.

Based on the structure of the font generation model, the font generation model may include two cyclic working processes. FIG. 3 shows the first cyclic working process of the font generation model: a source-domain sample character is input into the first generation model to obtain a first target-domain generated character; and the first target-domain generated character is input into the second generation model to obtain a first source-domain generated character. FIG. 4 shows the second cyclic working process of the font generation model: a target-domain sample character is input into the second generation model to obtain a second source-domain generated character; and the second source-domain generated character is input into the first generation model to obtain a second target-domain generated character. Thus, samples for the font generation model may be unpaired images, and there is no need to establish a one-to-one mapping between training data.

In this embodiment of the present disclosure, the loss of the font generation model includes a generation loss and a discrimination loss. In the following, the calculation method of the generation loss of the font generation model and the calculation method of the discrimination loss of the font generation model are specifically described by using an example in which a user's handwritten is used as the target-domain font style.

FIG. 3 shows the first cyclic working process of the font generation model: the source-domain sample character (for example, an image including a character in regular script, a regular script character image for short) is input into the first generation model to obtain the first target-domain generated character (for example, an image including a handwritten character, a handwritten character image for short). The first target-domain generated character (the handwritten character image) is input into the second generation model to obtain the first source-domain generated character (a regular script character image).

During the first cyclic working process, the source-domain sample character is a real regular script character image, while the first source-domain generated character is a regular script character image generated by the model. The regular script character image generated by the model may be referred to as a fake regular script character image. The first target-domain generated character is a handwritten character image generated by the model. The handwritten character image generated by the model may be referred to as a fake handwritten character image. During a training process, the source-domain sample character may be marked as Real (for example, the value of the character is 1), and the first target-domain generated character may be marked as Fake (for example, the value of the character is 0).

The source-domain sample character is input to the first discrimination model. For the first discrimination model, the expected output should be 1. If the actual output of the first discrimination model is X, and the loss of the first discrimination model is calculated by the mean square deviation, a part of the loss of the first discrimination model may be expressed as $(X - 1)^2$.

The first target-domain generated character is input into the second discrimination model. For the second discrimination model, the expected output should be 0. If the actual output of the second discrimination model is $Y^*$ (for convenience of differentiation, a parameter with $*$ may represent that the parameter is related to an image generated by the model, and a parameter without $*$ represents that the parameter is related to a real image), and the loss of the second discrimination model is calculated by using the mean square deviation, a part of the loss of the second discrimination model may be expressed as $(Y^* - 0)^2$.

The first target-domain generated character is input into the second discrimination model. For the first generation model, the output of the second discrimination model is expected to be 1. If the actual output of the second discrimination model is $Y^*$, and the loss of the first generation model is calculated by using the mean square deviation, a part of the loss of the first generation model may be expressed as $(Y^* - 1)^2$. The loss may be the adversarial loss of the first generation model.

To ensure that the first source-domain generated character obtained by inputting the source-domain sample character into the first generation model merely has style conversion, and the content is kept unchanged, a cycle-consistency loss may be added for the first generation model. The loss may be calculated according to the difference between the source-domain sample character and the first source-domain generated character. For example, a difference is made between the pixel value of each pixel in the image of the source-domain sample character and the pixel value of the corresponding pixel in the image of the first source-domain generated character, and the absolute value of the difference is calculated. In this manner, the difference of each pixel is obtained. The differences of all pixels in the image of the source-domain sample character and the corresponding pixels in the image of the first source-domain generated character are summed to obtain the cycle-consistency loss of the first generation model. The cycle-consistency loss may be denoted as $L1_{A2B}$.

Therefore, one part of the loss of the first generation model is $(Y^* - 1)^2$, and the other part of the loss is $L1_{A2B}$. The sum of the two parts of the loss is taken as the overall loss $L_{A2B}$ of the first generation model. The overall loss $L_{A2B}$ of the first generation model may be expressed by the following equation (1):

$$L_{A2B} = (Y^* - 1)^2 + L1_{A2B} \quad (1)$$

FIG. 4 shows the second cyclic working process of the font generation model: the target-domain sample character (for example, an image including a handwritten character, a handwritten character image for short) is input into the second generation model to obtain the second source-domain generated character (for example, an image including a character in regular script, a regular script character image for short). The second source-domain generated character (the regular script character image) is input into the first generation model to obtain the second target-domain generated character (a handwritten character image).

During the second cyclic working process, the target-domain sample character is a real handwritten character image. The second target-domain generated character is a handwritten character image generated by the model and may be referred to as a fake handwritten character image. During the training process, the target-domain sample character may be marked as Real (for example, the value of the character is 1), and the second source-domain generated character may be marked as Fake (for example, the value of the character is 0).

The target-domain sample character is input to the second discrimination model. For the second discrimination model, the expected output should be 1. If the actual output of the second discrimination model is Y, and the loss of the second discrimination model is calculated by using the mean square deviation, a part of the loss of the second discrimination model may be expressed as $(Y - 1)^2$.

The second source-domain generated character is input into the first discrimination model. For the first discrimination model, the expected output should be 0. If the actual output of the first discrimination model is X*, and the loss of the first discrimination model is calculated by using the mean square deviation, a part of the loss of the first discrimination model may be expressed as $(X^* - 0)^2$.

The second source-domain generated character is input into the first discrimination model. For the second generation model, the output of the first discrimination model is expected to be 1. If the actual output of the first discrimination model is X*, and calculate the loss of the second generation model is calculated by using the mean square deviation, a part of the loss of the second generation model may be expressed as $(X^* - 1)^2$.

To ensure that the second target source-domain generated character obtained by inputting the target-domain sample character into the second generation model merely has style conversion, and the content is kept unchanged, a cycle-consistency loss may be added for the second generation model. The loss may be calculated according to the difference between the target-domain sample character and the second target-domain generated character. For example, a difference is made between the pixel value of each pixel in the image of the target-domain sample character and the pixel value of the corresponding pixel in the image of the second target-domain generated character, and the absolute value of the difference is calculated. In this manner, the difference of each pixel is obtained. The differences of all pixels in the image of the target-domain sample character and the corresponding pixels in the image of the second target-domain generated character are summed to obtain the cycle-consistency loss of the second generation model. The cycle-consistency loss may be denoted as $L1_{B2A}$.

Therefore, one part of the loss of the second generation model may is $(X^* - 1)^2$, and another part of the loss is $L1_{B2A}$. The sum of the two parts of the loss is taken as the overall loss $L_{B2A}$ of the second generation model. The overall loss $L_{B2A}$ of the second generation model may be expressed by the following equation (2):

$$L_{B2A} = (X^* - 1)^2 + L1_{B2A} \quad (2)$$

The sum of the overall loss $L_{A2B}$ of the first generation model and the overall loss $L_{B2A}$ of the second generation model may be taken as the generation loss of the font generation model. The generation loss may be expressed by the following equation (3):

$$L_G = (Y^* - 1)^2 + L1_{A2B} + (X^* - 1)^2 + L1_{B2A} \quad (3)$$

$L_G$ denotes the generation loss of the font generation model and may be configured to adjust the model parameter of the first generation model and the model parameter of the second generation model.

The discrimination loss of the font generation model includes the discrimination loss of the first discrimination model and the discrimination loss of the second discrimination model.

A part of the loss of the first discrimination model calculated according to FIG. 3 is $(X - 1)^2$, and the other part of the loss of the first discrimination model calculated according to FIG. 4 is $(X^* - 0)^2$. The sum of the two parts of the loss may be taken as the discrimination loss of the first discrimination model. The discrimination loss $L_A$ of the first discrimination model may be expressed by the following equation (4):

$$L_A = (X - 1)^2 + (X^* - 0)^2 \quad (4)$$

The discrimination loss $L_A$ of the first discrimination model may be configured to adjust the model parameter of the first discrimination model.

Similarly, a part of the loss of the second discrimination model calculated according to FIG. 3 is $(Y^* - 0)^2$, and

the other part of the loss of the second discrimination model calculated according to FIG. 4 is $(Y - 1)^2$. The sum of the two parts of the loss may be taken as the discrimination loss of the second discrimination model. The discrimination loss $L_B$ of the second discrimination model may be expressed by the following equation (5):

$$L_B = (Y - 1)^2 + (Y^* - 0)^2 \quad (5)$$

The discrimination loss $L_B$ of the second discrimination model may be configured to adjust the model parameter of the second discrimination model. In the preceding technical schemes, the model parameter of the first generation model is updated through the use of the generation loss of the font generation model. Therefore, the font generation model can be optimized according to the structure of the font generation model, and the ability of the font generation model to learn the font feature can be improved.

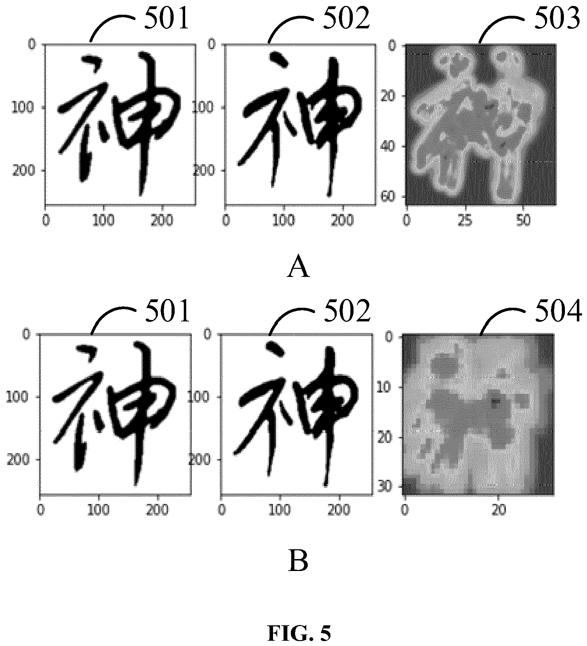

FIGS. 5A-5B are diagrams illustrating the visual effect of a first feature loss according to an embodiment of the present disclosure. In a specific example, as shown in FIG. 5A, a target-domain sample character 501 is a real image including a handwritten Chinese character "神", that is, the Chinese character "神" in the target-domain sample character 501 is a real user's handwritten character. A first target-domain generated character 502 is an image that includes the handwritten Chinese character "神" and is generated by the font generation model. The size of the target-domain sample character 501 and the size of the first target-domain generated character 502 are each 256 × 256. The target-domain sample character 501 and the first target-domain generated character 502 are input into the character classification model. A first sample character feature map and a first generated-character feature map are output by the first target feature layer of the character classification model, respectively. The size of the first sample character feature map and the size of the first generated-character feature map are each 64 × 64. After the pixel differences between these two 64 × 64 images are calculated, a heat effect map 503 that shows the differences between the two images is obtained. The heat effect map 503 is also a 64 × 64 image. The darker the color in the heat effect map 503 is, the greater the difference between the target-domain sample character 501 and the first target-domain generated character 502 is. Therefore, the font generation model focuses more on learning the features of the darker parts in the heat effect map 503, and the ability of the font generation model to learn the font feature can be improved.

Similarly, as shown in FIG. 5B, the target-domain sample character 501 and the first target-domain generated character 502 are input into the character classification model. A first sample character feature map and a first generated-character feature map are output by the second target feature layer of the character classification model respectively. The size of the first sample character feature map and the size of the first generated-character feature map are each 32 × 32. After the pixel differences between these two 32 × 32 images are calculated, a heat effect map 504 that shows the differences between the two images is obtained. The heat effect map 504 is also a 32 × 32 image. The darker the color in the heat effect map 504 is, the greater the difference between the target-domain sample character 501 and the first target-domain generated character 502 is. Therefore, the font generation model focuses more on learning the features of the darker parts in the heat effect map 504, and the ability of the font generation model to learn the font feature can be improved.

It is to be understood that the heat effect map 503 and the heat effect map 504 may be combined to make the font generation model learn the features of the great difference between the target-domain sample character 501 and the first target-domain generated character 502. Therefore, the ability of the font generation model to learn the font feature can be improved.

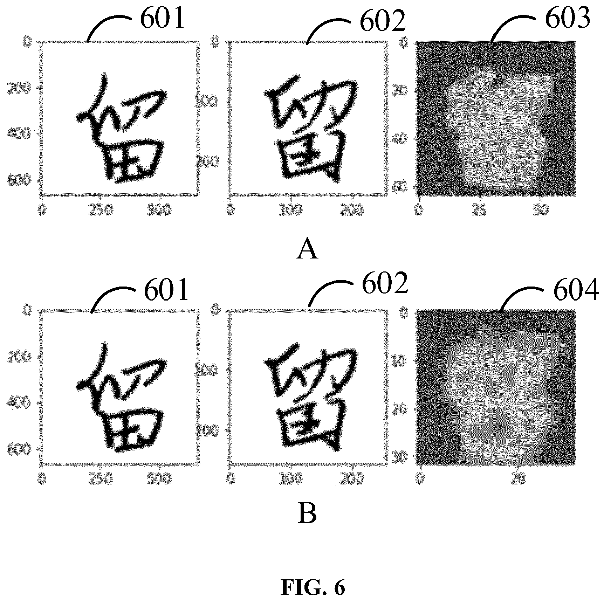

FIGS. 6A-6B are diagrams illustrating the visual effect of a second feature loss according to an embodiment of the present disclosure. In a specific example, as shown in FIG. 6A, a target-domain sample character 601 is a real image including a handwritten Chinese character "留", that is, the Chinese character "留" in the target-domain sample character 601 is a real user's handwritten character. A first target-domain generated character 602 is an image that includes the handwritten Chinese character "留" and is generated by the font generation model. The size of the target-domain sample character 601 and the size of the first target-domain generated character 602 are each 256 × 256. The target-domain sample character 601 and the first target-domain generated character 602 are input into the font classification model. A second sample character feature map and a second generated-character feature map are output by the first target feature layer of the font classification model, respectively. The size of the second sample character feature map and the size of the second generated-character feature map are each 64 × 64. After the pixel differences between these two 64 × 64 images are calculated, a heat effect map 603 that shows the differences between the two images is obtained. The heat effect map 603 is also a 64 × 64 image. The darker the color in the heat effect map 603 is, the greater the difference between the target-domain sample character 601 and the first target-domain generated character 602 is. Therefore, the font generation model focuses more on learning features of the darker parts in the heat effect map 603, and the ability of the font generation model to learn the font feature can be improved.

Similarly, as shown in FIG. 6B, the target-domain sample character 601 and the first target-domain generated character 602 are input into the font classification model. A second sample character feature map and a second generated-character feature map are output by the second target feature layer of the font classification model, respectively. The size of the second sample character feature map and the size of the second generated-character feature map are each $32 \times 32$. After the pixel differences between these two $32 \times 32$ images are calculated, a heat effect map 604 that shows the differences between the two images is obtained. The heat effect map 604 is also a $32 \times 32$ image. The darker the color in the heat effect map 604 is, the greater the difference between the target-domain sample character 601 and the first target-domain generated character 602 is. Therefore, the font generation model focuses more on learning features of the darker parts in the heat effect map 604, and the ability of the font generation model to learn the font feature can be improved.

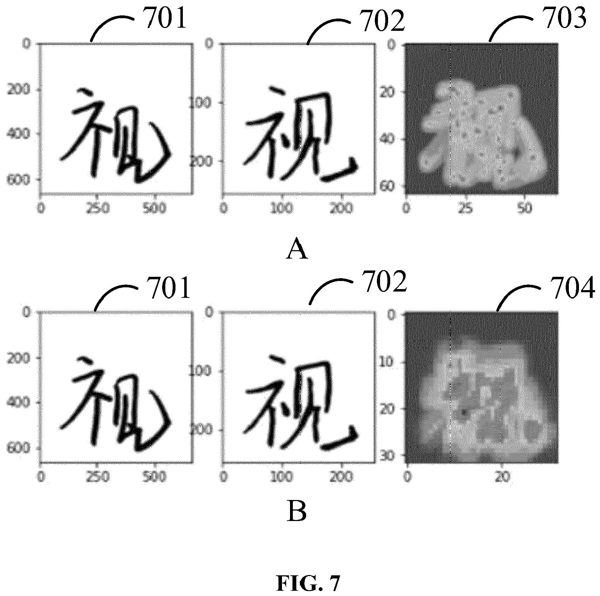

FIGS. 7A-7B are diagrams illustrating the visual effect of a second feature loss according to an embodiment of the present disclosure. In another specific example, as shown in FIG. 7A, a target-domain sample character 701 is a real image including a handwritten Chinese character "视", that is, the Chinese character "视" in the target-domain sample character 701 is a real user's handwritten character. A first target-domain generated character 702 is an image that includes the handwritten Chinese character "视" and is generated by the font generation model. The size of the target-domain sample character 701 and the size of the first target-domain generated character 702 are each $256 \times 256$. The target-domain sample character 701 and the first target-domain generated character 702 are input into the font classification model. A second sample character feature map and a second generated-character feature map are output by the first target feature layer of the font classification model, respectively. The size of the second sample character feature map and the size of the second generated-character feature map are each $64 \times 64$. After the pixel differences between these two $64 \times 64$ images are calculated, a heat effect map 703 that shows the differences between the two images is obtained. The heat effect map 703 is also a $64 \times 64$ image. The darker the color in the heat effect map 703 is, the greater the difference between the target-domain sample character 701 and the first target-domain generated character 702 is. Therefore, the font generation model focuses more on learning features of the darker parts in the heat effect map 703, and the ability of the font generation model to learn the font feature can be improved.

Similarly, as shown in FIG. 7B, the target-domain sample character 701 and the first target-domain generated character 702 are input into the font classification model. A second sample character feature map and a second generated-character feature map are output by the second target feature layer of the font classification model, respectively. The size of the second sample character feature map and the size of the second generated-character feature map are each $32 \times 32$. After the pixel differences between the two $32 \times 32$ images are calculated, a heat effect map 704 that shows the differences between the two images is obtained. The heat effect map 704 is also a $32 \times 32$ image. The darker the color in the heat effect map 704 is, the greater the difference between the target-domain sample character 701 and the first target-domain generated character 702 is. Therefore, the font generation model focuses more on learning the features of the darker parts in the heat effect map 704, and the ability of the font generation model to learn the font feature can be improved.

It is to be understood that the heat effect map 603 and the heat effect map 604 may be combined to enable the font generation model to learn the features of the great difference between the target-domain sample character 601 and the first target-domain generated character 602. Therefore, the ability of the font generation model to learn the font feature can be improved. Similarly, the heat effect map 703 and the heat effect map 704 may be combined to enable the font generation model to learn the features of the great difference between the target-domain sample character 701 and the first target-domain generated character 702. Therefore, the ability of the font generation model to learn the font feature can be improved.

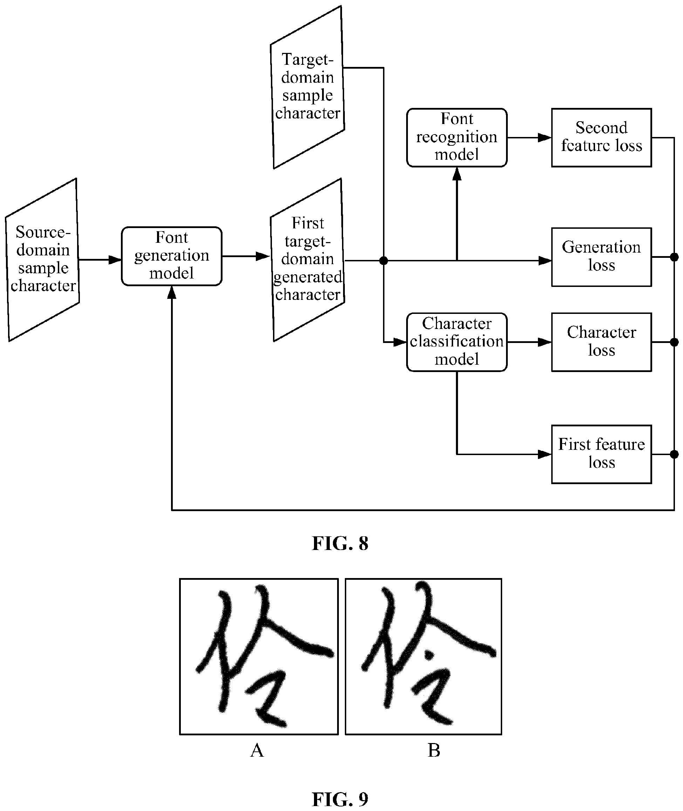

FIG. 8 is a principle diagram of a method for training a font generation model according to an embodiment of the present disclosure. As shown in FIG. 8, the complete training process of the font generation model may include the operations below. First, the source-domain sample character is input into the first generation model of the font generation model to obtain the first target-domain generated character and the first source-domain generated character. The target-domain sample character is input into the second generation model of the font generation model to obtain the second target-domain generated character and the second source-domain generated character. Further, the generation loss of the font generation model is calculated according to the source-domain sample character, the first target-domain generated character, the first source-domain generated character, the target-domain sample character, the second target-domain generated character and the second source-domain generated character, and the model parameter of the first generation model is updated according to the generation loss to perform the training of the font generation model. After the first training of the font generation model is completed, the first target-domain generated character is input into the pre-trained character classification model to obtain the character loss of the font generation model. The first target-domain generated character and the target-domain sample character are input into the character classification model to obtain the first feature loss of the font generation model. Similarly, the first target-domain generated character and the target-domain sample character are input into the font classification model to obtain the second feature loss of the font generation model. Further, the target feature loss may be determined according to the first feature loss and/or the second feature loss, and the model parameter of the first generation model is updated according to the calculated character loss and the calculated target feature loss above to perform the training of the font generation model again. It is to be noted that the training process of the font generation model according to the character loss and the training process of the font generation model according to the target feature loss may be executed synchronously or sequentially, which is not limited in the embodiments of the present disclosure.

In the preceding technical schemes, the model parameter of the first generation model is updated through the use of the character loss and the target feature loss to perform the supervision and training of the font generation model. Thus, the probability of generating an incorrect character by the font generation model can be reduced, and the accuracy of the font generation model to generate a font and the ability of the font generation model to learn a font feature can be improved.

FIGS. 9A-9B are comparison diagrams illustrating the effect of a font generation model that is obtained by being trained using a character loss according to an embodiment of the present disclosure. In a specific example, FIG. 9A is an image that includes a handwritten Chinese character "伶" and that is generated in a case where the font generation model is not constrained by the character loss. FIG. 9B is an image that includes a handwritten Chinese character "伶" and that is generated in a case where the font generation model is constrained by the character loss. Compared with the correct Chinese character "伶", the Chinese character "伶" in FIG. 9A misses a stroke of the dot. The Chinese character "伶" in FIG. 9B is the correct Chinese character "伶". Therefore, the font generation model constrained by the character loss can learn the correct character. In this manner, the incorrect character rate is reduced, and the accuracy of the model is improved.

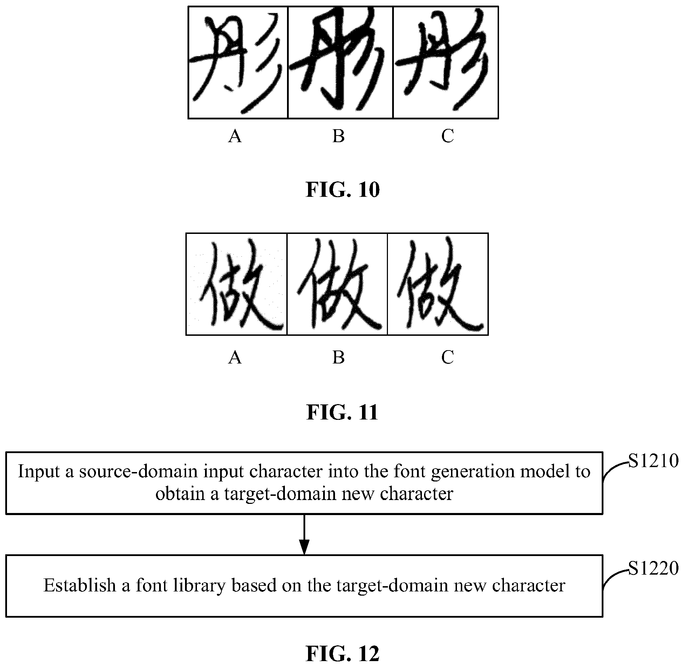

FIGS. 10A-10C are comparison diagrams illustrating the effect of a font generation model that is obtained by being trained using a first feature loss according to an embodiment of the present disclosure. In a specific example, FIG. 10A is an image that includes a real handwritten Chinese character "彤", that is, the Chinese character "彤" in FIG. 10A is a real user's handwritten character. FIG. 10B is an image that includes a handwritten Chinese character "彤 彤" and that is generated in a case where the font generation model is not constrained by the first feature loss. FIG. 10C is an image that includes a handwritten Chinese character "彤 彤" and that is generated in a case where the font generation model is constrained by the first character loss. Compared with the Chinese character "彤 彤" in FIG. 10B, the Chinese character "彤 彤" in FIG. 10C learns more features of the real user's handwritten Chinese character "彤 彤" (that is, the Chinese character "彤 彤" in FIG. 10A) and is more similar to the real user's handwritten Chinese character "彤 彤".

FIGS. 11A-11C are comparison diagrams illustrating the effect of a font generation model that is obtained by being trained using a second feature loss according to an embodiment of the present disclosure. In a specific example, FIG. 11A is an image that includes a real handwritten Chinese character "做 做", that is, the Chinese character "做 做" in FIG. 11A is a real user's handwritten character. FIG. 11B is an image that includes a handwritten Chinese character "做 做" and that is generated in a case where the font generation model is not constrained by the second feature loss. FIG. 11C is an image that includes a handwritten Chinese character "做 做" and that is generated in a case where the font generation model is constrained by the second character loss. Compared with the Chinese character "做 做" in FIG. 11B, the Chinese character "做 做" in FIG. 11C learns more features of the real user's handwritten Chinese character "做 做" (that is, the Chinese character "做 做" in FIG. 11A) and is more similar to the real user's

handwritten Chinese character "做 ".

In the preceding technical schemes, the font generation model is trained through the use of various loss types such as the generation loss, the character loss and the target feature loss. In this manner, the ability of the font generation model to learn a font feature can be improved, and the incorrect character generation rate is reduced. Thus, the aesthetic and accuracy of a font generated by the font generation model can be improved, and thus the ability of the font generation model to generate a font-level font can be improved.

In the technical schemes of the present disclosure, the collection, storage, use, processing, transmission, provision, and disclosure of user personal information (such as user font information) involved are in compliance with provisions of relevant laws and regulations, and do not violate public order and good customs.

It is to be noted that any arrangement and combination of various technical features in the preceding embodiments are also within the scope of the present disclosure.

In an example, FIG. 12 is a flowchart of a method for establishing a font library according to an embodiment of the present disclosure. This embodiment of the present disclosure may be applied to a case where the font library is established through the use of the font generation model trained and optimized according to various types of feature loss. The method may be executed by an apparatus for establishing a font library. The apparatus may be performed by software and/or hardware and may generally be integrated in an electronic device. The electronic device may be a terminal device, a server device, or the like. The type of the electronic device that executes the method for establishing a font library is not limited in this embodiment of the present disclosure. Accordingly, as shown in FIG. 12, the method includes the operations below.

In S1210, a source-domain input character is input into the font generation model to obtain a target-domain new character.

The source-domain input character may be some characters of a source-domain font. The target-domain new character may be a new character that has a target-domain font style and needs to be generated. For example, the source-domain input character may be a regular script character image. The new character may be a handwritten character image. The regular script character image is input into the font generation model to obtain the handwritten character image. The font generation model is obtained by being trained using the method for training a font generation model described in any preceding embodiment.

In S1220, the font library is established based on the target-domain new character.

For example, the new character generated by the font generation model may be stored, and a font library having a handwritten font style is established. The font library may be applied to an input method, and a user can directly obtain a character having the handwritten font style by using the input method based on the font library. In this manner, diverse requirements of the user are satisfied, and the user experience is improved.

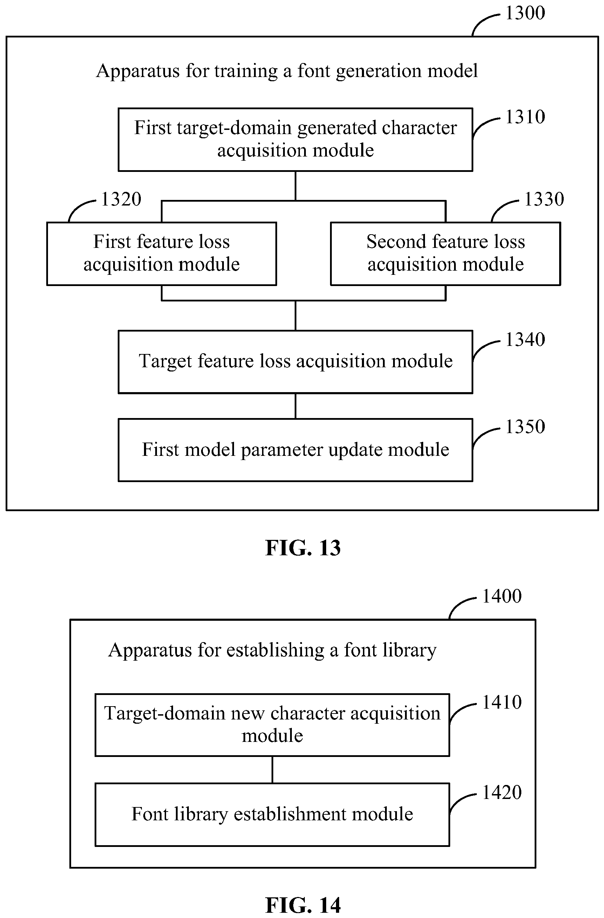

In an example, FIG. 13 is a diagram illustrating the structure of an apparatus for training a font generation model according to an embodiment of the present disclosure. This embodiment of the present disclosure may be applied to the case where the font generation model is trained and optimized according to various types of feature loss. The apparatus is performed by software and/or hardware and is configured in an electronic device. The electronic device may be a terminal device, a server device, or the like. The type of the electronic device that performs the method for training a font generation model is not limited in the embodiments of the present disclosure.

As shown in FIG. 13, an apparatus 1300 for training a font generation model includes a first target-domain generated character acquisition module 1310, a first feature loss acquisition module 1320, a second feature loss acquisition module 1330, a target feature loss acquisition module 1340 and a first model parameter update module 1350.

The first target-domain generated character acquisition module 1310 is configured to input a source-domain sample character into the font generation model to obtain a first target-domain generated character.

The first feature loss acquisition module 1320 is configured to input the first target-domain generated character and a preset target-domain sample character into a character classification model to obtain a first feature loss of the font generation model.

The second feature loss acquisition module 1330 is configured to input the first target-domain generated character and the target-domain sample character into a font classification model to obtain a second feature loss of the font generation model.

The target feature loss acquisition module 1340 is configured to determine a target feature loss according to the first feature loss and/or the second feature loss.

The first model parameter update module 1350 is configured to update a model parameter of the font generation model according to the target feature loss.

In this embodiment of the present disclosure, the source-domain sample character is input into the font generation model to obtain the first target-domain generated character, and the first target-domain generated character and the preset target-domain sample character are input into the character classification model and the font classification model respectively to obtain the first feature loss and the second feature loss of the font generation model. Then, the model parameter of the font generation model is updated according to the target feature loss determined according to the first feature loss and/or the second feature loss to perform the training of the font generation model. After the training of the font generation model is completed, the target source-domain input character may be input into the font generation model to obtain the target-domain new character, and the font library is established based on the target-domain new character. Thus, the problem that the existing font generation model is difficult to generate a font-level font is solved. In this manner, the ability of the font generation model to learn a font feature can be improved, and thus the ability of the font generation model to generate a font-level font can be improved.

Optionally, the character classification model may include a plurality of feature layers, and the first feature loss acquisition module 1320 may be configured to: input the first target-domain generated character into the character classification model to obtain a first generated-character feature map output by each feature layer of the character classification model; input the target-domain sample character into the character classification model to obtain a first sample character feature map output by each feature layer of the character classification model; and calculate a difference between the first generated-character feature map of the target feature layer and the first sample character feature map of the target feature layer to obtain the first feature loss.

Optionally, the first feature loss acquisition module 1320 may be configured to: calculate a pixel difference between the first generated-character feature map of the target feature layer and the first sample character feature map of the target feature layer to obtain a first pixel loss of the target feature layer; and calculate the first feature loss according to the first pixel loss of the target feature layer.

Optionally, the first feature loss acquisition module 1320 may be configured to: calculate an absolute value of the difference value between a pixel value of a pixel at each position in the first generated-character feature map and a pixel value of a pixel at the corresponding position in the first sample character feature map to obtain a difference between the pixel at each position in the first generated-character feature map and the pixel at the corresponding position in the first sample character feature map; and determine the pixel difference between the first generated-character feature map and the first sample character feature map according to differences between pixels at a plurality of positions in the first generated-character feature map and pixels at the corresponding positions in the first sample character feature map.

Optionally, the font classification model may include a plurality of feature layers, and the second feature loss acquisition module 1330 is configured to: input the first target-domain generated character into the font classification model to obtain a second generated-character feature map output by each feature layer of the font classification model; input the target-domain sample character into the font classification model to obtain a second sample character feature map output by each feature layer of the font classification model; and calculate a difference between the second generated-character feature map of the target feature layer and the second sample character feature map of the target feature layer to obtain the second feature loss.

Optionally, the second feature loss acquisition module 1330 may be configured to: calculate a pixel difference between the second generated-character feature map of the target feature layer and the second sample character feature map of the target feature layer to obtain a second pixel loss of the target feature layer; and calculate the second feature loss according to the second pixel loss of the target feature layer.

Optionally, the second feature loss acquisition module 1330 may be configured to: calculate an absolute value of the difference value between a pixel value of a pixel at each position in the second generated-character feature map and a pixel value of a pixel at the corresponding position in the second sample character feature map to obtain the difference between the pixel at each position in the second generated-character feature map and the pixel at the corresponding position in the second sample character feature map; and determine the pixel difference between the second generated-character feature map and the second sample character feature map according to differences between pixels at a plurality of positions in the second generated-character feature map and pixels at the corresponding positions in the second sample character feature map.

Optionally, the font generation model may be a cyclic network generation model and include a first generation model and a second generation model. The first target-domain generated character acquisition module 1310 is configured to input the source-domain sample character into the first generation model to obtain the first target-domain generated character and a first source-domain generated character. The apparatus for training a font generation model further includes a second target-domain generated character acquisition module, a generation loss calculation module and a second model parameter update module. The second target-domain generated character acquisition module is configured to input the target-domain sample character into the second generation model to obtain a second target-domain generated character and a second source-domain generated character. The generation loss calculation module is configured to calculate a generation loss of the font generation model according to the source-domain sample character, the first target-domain generated character, the first source-domain generated character, the target-domain sample character, the second target-domain generated character and the second source-domain generated character. The second model parameter update module is configured to update a model parameter of the first generation model according to the generation loss.

Alternatively, the apparatus for training a font generation model may further include a character loss acquisition module configured to input the first target-domain generated character into the character classification model and to calculate a character loss of the font generation model. The first model parameter update module 1350 is configured to update the model parameter of the first generation model according to the character loss and the target feature loss.

Optionally, the character loss acquisition module is configured to: input the first target-domain generated character into the character classification model to obtain a generated-character vector of the first target-domain generated character; and calculate the character loss according to the difference between the generated-character vector and a preset standard character vector.

Optionally, the character loss acquisition module may be configured to calculate the character loss according to the following formula:

$$LC = -\sum_{0}^{n} x_i \log y_i$$

LC denotes the character loss. $x_i$ denotes an element with a subscript i in the generated-character vector. $y_i$ denotes an element with the subscript i in the standard character vector. i denotes an integer greater than or equal to 0 and less than or equal to n. n denotes the number of elements in the generated-character vector and in the standard character vector.

Optionally, the source-domain sample character may be an image having a target source-domain font style, and the target-domain sample character may be an image having a target-domain font style.

The preceding apparatus for training a font generation model may execute the method for training a font generation model according to any embodiment of the present disclosure and has functional modules and beneficial effects corresponding to the method executed. For technical details not described in detail in this embodiment, reference may be made to the method for training a font generation model according to any embodiment of the present disclosure.

In an example, FIG. 14 is a diagram illustrating the structure of an apparatus for establishing a font library according to an embodiment of the present disclosure. This embodiment of the present disclosure may be applied to a case where the font library is established through the use of the font generation model trained and optimized according to various types of feature loss. The apparatus is performed by software and/or hardware and is configured in an electronic device. The electronic device may be a terminal device, a server device, or the like.

As shown in FIG. 14, an apparatus 1400 for establishing a font library includes a target-domain new character acquisition module 1410 and a font library establishment module 1420.

The target-domain new character acquisition module 1410 is configured to input a source-domain input character into a font generation model to obtain a target-domain new character.

The font library establishment module 1420 is configured to establish the font library based on the target-domain new character.

The font generation model is obtained by being trained using the apparatus for training a font generation model according to any embodiment of the present disclosure.

In this embodiment of the present disclosure, the new character generated by the font generation model is stored, and the font library having a handwritten font style is established. The font library may be applied to an input method, and the user can directly obtain a character having the handwritten font style by using the input method based on the font library. In this manner, diverse requirements of the user are satisfied, and the user experience is improved.

The preceding apparatus for establishing a font library may execute the method for establishing a font library according to any embodiment of the present disclosure and has functional modules and beneficial effects corresponding to the method executed. For technical details not described in detail in this embodiment, reference may be made to the method for establishing a font library according to any embodiment of the present disclosure.

In an example, the present disclosure further provides an electronic device, a readable storage medium and a computer program product.

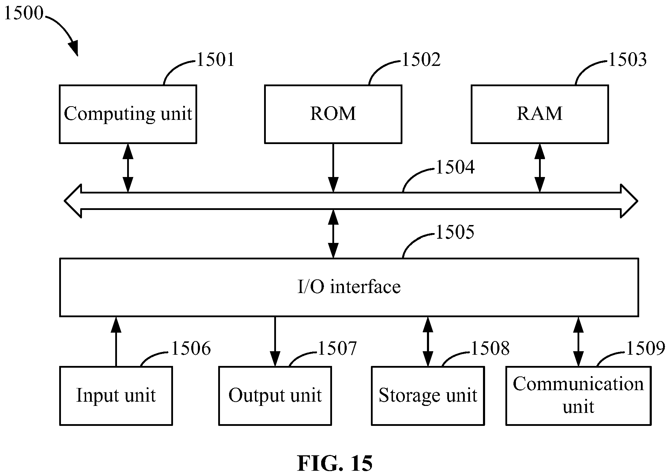

FIG. 15 is a block diagram illustrating an exemplary electronic device 1500 that may be configured to perform the embodiments of the present disclosure. Electronic devices are intended to represent various forms of digital computers, for example, laptop computers, desktop computers, worktables, personal digital assistants, servers, blade servers, mainframe computers and other applicable computers. Electronic devices may further represent various forms of mobile devices, for example, personal digital processing, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 15, the device 1500 includes a computing unit. The computing unit may execute various types of appropriate operations and processing based on a computer program stored in a read-only memory (ROM) 1502 or a computer program loaded from a storage unit 1508 to a random-access memory (RAM) 1503. Various programs and data required for operations of the device 1500 may also be stored in the RAM 1503. The computing unit, the ROM 1502 and the RAM 1503 are connected to each other by a bus 1504. An input/output (I/O) interface 1505 is also connected to the bus 1504.

Multiple components in the device 1500 are connected to the I/O interface 1505. The multiple components include an input unit 1506 such as a keyboard and a mouse, an output unit 1507 such as various types of displays and speakers, the storage unit 1508 such as a magnetic disk and an optical disk, and a communication unit 1509 such as a network card, a modem or a wireless communication transceiver. The communication unit 1509 allows the device 1500 to exchange information/data with other devices over a computer network such as the Internet and/or various telecommunications networks.

The computing unit may be various general-purpose and/or special-purpose processing components having processing and computing capabilities. Some examples of the computing unit include, but are not limited to, a central processing unit (CPU), a graphics processing unit (GPU), various special-purpose artificial intelligence (AI) computing chips, various computing units executing machine learning models and algorithms, a digital signal processor (DSP) and any appropriate processor, controller and microcontroller. The computing unit executes various methods and processing described above, such as the method for training a font generation model or the method for establishing a font library. For example, in some embodiments, the method for training a font generation model or the method for establishing a font library may be performed as a computer software program tangibly contained in a machine-readable medium such as the storage unit 1508. In some embodiments, part or all of computer programs may be loaded and/or installed on the device 1500 via the ROM 1502 and/or the communication unit 1509. When the computer programs are loaded into the RAM 1503 and executed by the computing unit, one or more steps of the preceding method for training a font generation model or the method for establishing a font library may be executed. Alternatively, in other embodiments, the computing unit may be configured, in any other suitable manner (for example, by means of firmware), to execute the method for training a font generation model or the method for establishing a font library.

Herein various embodiments of the systems and techniques described in the preceding may be performed in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software and/or combinations thereof. The various embodiments may include implementations in one or more computer programs. The one or more computer programs may be executable and/or interpretable on a programmable system including at least one programmable processor. The programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

Program codes for implementing the methods of the present disclosure may be compiled in any combination of one or more programming languages. The program codes may be provided for the processor or controller of a general-purpose computer, a special-purpose computer or other programmable data processing apparatuses to enable functions/operations specified in flowcharts and/or block diagrams to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, the machine-readable medium may be a tangible medium that may include or store a program that is used by or in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device or any appropriate combination thereof.

In order to provide an interaction with a user, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input for the computer. Other types of apparatuses may also be configured to provide interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

The computing system may include clients and servers. The clients and servers are usually far away from one another and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a traditional physical host and a virtual private server (VPS) service. The server may further be a server of a distributed system, or a server combined with a blockchain.

In this embodiment of the present disclosure, the source-domain sample character is input into the font generation model to obtain the first target-domain generated character, and the first target-domain generated character and the preset target-domain sample character are input into the character classification model and the font classification model respectively to obtain the first feature loss and the second feature loss of the font generation model. Then, the model parameter of the font generation model is updated according to the target feature loss determined according to the first feature loss and/or the second feature loss to perform the training of the font generation model. After the training of the font generation model is completed, the target source-domain input character may be input into the font generation model to obtain the target-domain new character, and the font library is established based on the target-domain new character. Thus, the problem that the existing font generation model is difficult to generate a font-level font is solved. In this manner, the ability of the font generation model to learn a font feature can be improved, and thus the ability of the font generation model to generate a font-level font can be improved.

It is to be understood that various forms of the preceding flows may be used with steps reordered, added, or removed. For example, the steps described in the present disclosure may be executed in parallel, in sequence or in a different order as long as the desired result of the technical solutions disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made according to design requirements and other factors. Any modification, equivalent substitution, improvement made within the principle of the present disclosure falls within the scope of the present disclosure.

**Claims**

1. A method for training a font generation model, comprising:

   inputting a source-domain sample character into the font generation model to obtain a first target-domain generated character;
   inputting the first target-domain generated character and a preset target-domain sample character into a character classification model to obtain a first feature loss of the font generation model;
   inputting the first target-domain generated character and the target-domain sample character into a font classification model to obtain a second feature loss of the font generation model;
   determining a target feature loss according to at least one of the first feature loss or the second feature loss; and
   updating a model parameter of the font generation model according to the target feature loss.

2. The method according to claim 1, wherein the character classification model comprises a plurality of feature layers; and
   inputting the first target-domain generated character and the preset target-domain sample character into the character classification model to obtain the first feature loss of the font generation model comprises:

   inputting the first target-domain generated character into the character classification model to obtain a first generated-character feature map output by each feature layer of the plurality of feature layers of the character classification model;
   inputting the target-domain sample character into the character classification model to obtain a first sample character feature map output by each feature layer of the character classification model; and
   calculating a difference between the first generated-character feature map of a target feature layer and the first sample character feature map of the target feature layer to obtain the first feature loss.

3. The method according to claim 2, wherein calculating the difference between the first generated-character feature map of the target feature layer and the first sample character feature map of the target feature layer comprises:

calculating a pixel difference between the first generated-character feature map of the target feature layer and the first sample character feature map of the target feature layer to obtain a first pixel loss of the target feature layer; and
calculating the first feature loss according to the first pixel loss of the target feature layer.

4. The method according to claim 3, wherein calculating the pixel difference between the first generated-character feature map of the target feature layer and the first sample character feature map of the target feature layer comprises:

calculating an absolute value of a difference value between a pixel value of a pixel at each position in the first generated-character feature map and a pixel value of a pixel at a corresponding position in the first sample character feature map to obtain a difference between the pixel at each position in the first generated-character feature map and the pixel at the corresponding position in the first sample character feature map; and
determining the pixel difference between the first generated-character feature map and the first sample character feature map according to differences between pixels at a plurality of positions in the first generated-character feature map and pixels at corresponding positions in the first sample character feature map.

5. The method according to claim 1, wherein the font classification model comprises a plurality of feature layers; and inputting the first target-domain generated character and the target-domain sample character into the font classification model to obtain the second feature loss of the font generation model comprises:

inputting the first target-domain generated character into the font classification model to obtain a second generated-character feature map output by each feature layer of the plurality of feature layers of the font classification model;
inputting the target-domain sample character into the font classification model to obtain a second sample character feature map output by each feature layer of the font classification model; and
calculating a difference between the second generated-character feature map of a target feature layer and the second sample character feature map of the target feature layer to obtain the second feature loss.

6. The method according to claim 5, wherein calculating the difference between the second generated-character feature map of the target feature layer and the second sample character feature map of the target feature layer comprises:

calculating a pixel difference between the second generated-character feature map of the target feature layer and the second sample character feature map of the target feature layer to obtain a second pixel loss of the target feature layer; and
calculating the second feature loss according to the second pixel loss of the target feature layer.

7. The method according to claim 6, wherein calculating the pixel difference between the second generated-character feature map of the target feature layer and the second sample character feature map of the target feature layer comprises:

calculating an absolute value of a difference value between a pixel value of a pixel at each position in the second generated-character feature map and a pixel value of a pixel at a corresponding position in the second sample character feature map to obtain a difference between the pixel at each position in the second generated-character feature map and the pixel at the corresponding position in the second sample character feature map; and
determining the pixel difference between the second generated-character feature map and the second sample character feature map according to differences between pixels at a plurality of positions in the second generated-character feature map and pixels at corresponding positions in the second sample character feature map.

8. The method according to claim 1, wherein the font generation model is a cyclic network generation model and comprises a first generation model and a second generation model;

inputting the source-domain sample character into the font generation model to obtain the first target-domain generated character comprises:

inputting the source-domain sample character into the first generation model to obtain the first target-domain generated character and a first source-domain generated character; and
the method further comprises:

inputting the target-domain sample character into the second generation model to obtain a second target-domain generated character and a second source-domain generated character;
calculating a generation loss of the font generation model according to the source-domain sample character, the first target-domain generated character, the first source-domain generated character, the target-domain sample character, the second target-domain generated character and the second source-domain generated character; and
updating a model parameter of the first generation model according to the generation loss.

9. The method according to claim 8, further comprising:

inputting the first target-domain generated character into the character classification model and calculating a character loss of the font generation model;
wherein updating the model parameter of the font generation model according to the target feature loss comprises:
updating the model parameter of the first generation model according to the character loss and the target feature loss;
wherein inputting the first target-domain generated character into the character classification model and calculating the character loss of the font generation model comprise:

inputting the first target-domain generated character into the character classification model to obtain a generated-character vector of the first target-domain generated character; and
calculating the character loss according to a difference between the generated-character vector and a preset standard character vector.

10. The method according to any one of claims 1 to 9, wherein the source-domain sample character is an image having a target source-domain font style, and the target-domain sample character is an image having a target-domain font style.

11. A method for establishing a font library, comprising:

inputting a target source-domain input character into a font generation model to obtain a target-domain new character; and
establishing the font library based on the target-domain new character,
wherein the font generation model is obtained by being trained using the method for training a font generation model according to any one of claims 1 to 10.

12. An apparatus for training a font generation model, comprising:

a first target-domain generated character acquisition module configured to input a source-domain sample character into the font generation model to obtain a first target-domain generated character;
a first feature loss acquisition module configured to input the first target-domain generated character and a preset target-domain sample character into a character classification model to obtain a first feature loss of the font generation model;
a second feature loss acquisition module configured to input the first target-domain generated character and the target-domain sample character into a font classification model to obtain a second feature loss of the font generation model;
a target feature loss acquisition module configured to determine a target feature loss according to at least one of the first feature loss or the second feature loss; and
a first model parameter update module configured to update a model parameter of the font generation model according to the target feature loss.

13. An electronic device, comprising:

at least one processor; and

a memory communicatively connected to the at least one processor, wherein
the memory stores an instruction executable by the at least one processor to enable the at least one processor to execute the method for training a font generation model according to any one of claims 1 to 10 or execute the method for establishing a font library according to claim 11.

14. A non-transitory computer-readable storage medium storing a computer instruction to enable a computer to execute the method for training a font generation model according to any one of claims 1 to 10 or execute the method for establishing a font library according to claim 11.

15. A computer program product, comprising a computer program/instruction which, when executed by a processor, causes the processor to perform the method for training a font generation model according to any one of claims 1 to 10 or perform the method for establishing a font library according to claim 11.

Input a source-domain sample character into a font generation model to obtain a first target-domain generated character ⌐S110

Input the first target-domain generated character and a preset target-domain sample character into a character classification model to obtain a first feature loss of the font generation model ⌐S120

Input the first target-domain generated character and the target-domain sample character into a font classification model to obtain a second feature loss of the font generation model ⌐S130

Determine a target feature loss according to the first feature loss and/or the second feature loss ⌐S140

Update a model parameter of the font generation model according to the target feature loss ⌐S150

**FIG. 1**

Input a source-domain sample character into a first generation model to obtain a first target-domain generated character and a first source-domain generated character — S210

↓

Input a target-domain sample character into a second generation model to obtain a second target-domain generated character and a second source-domain generated character — S220

↓

Calculate a generation loss of the font generation model according to the source-domain sample character, the first target-domain generated character, the first source-domain generated character, the target-domain sample character, the second target-domain generated character and the second source-domain generated character — S230

↓

Update a model parameter of the first generation model according to the generation loss — S240

↓

Input the first target-domain generated character into a pre-trained character classification model to obtain a character loss of the font generation model — S250

↓

Input the first target-domain generated character and the preset target-domain sample character into a character classification model to obtain a first feature loss of the font generation model — S260

↓

Input the first target-domain generated character and the target-domain sample character into a font classification model to obtain a second feature loss of the font generation model — S270

↓

Determine a target feature loss according to the first feature loss and/or the second feature loss — S280

↓

Update a model parameter of the first generation model according to the character loss and the target feature loss — S290

**FIG. 2**

**FIG. 3**

**FIG. 4**

FIG. 5

A

B

**FIG. 6**

FIG. 7

**FIG. 8**

**FIG. 9**

**FIG. 10**

**FIG. 11**

Input a source-domain input character into the font generation model to obtain a target-domain new character ⌐S1210

Establish a font library based on the target-domain new character ⌐S1220

**FIG. 12**

1300

## Apparatus for training a font generation model

1310

First target-domain generated character
acquisition module

1320

First feature loss
acquisition module

1330

Second feature loss
acquisition module

1340

Target feature loss acquisition module

1350

First model parameter update module

**FIG. 13**

1400

## Apparatus for establishing a font library

1410

Target-domain new character acquisition
module

1420

Font library establishment module

**FIG. 14**

1500

1501
Computing unit

1502
ROM

1503
RAM

1504

1505
I/O interface

1506
Input unit

1507
Output unit

1508
Storage unit

1509
Communication unit

**FIG. 15**

Europäisches Patentamt
European Patent Office
Office européen des brevets

# EUROPEAN SEARCH REPORT

Application Number

EP 22 15 9077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG PARK ET AL: "Few-shot Font Generation with Localized Style Representations and Factorization", ARXIV.ORG, CORNELL UNIVERSITY LIBRARY, 201 OLIN LIBRARY CORNELL UNIVERSITY ITHACA, NY 14853, 23 September 2020 (2020-09-23), XP081769513, | 1-7, 10-15 | INV. G06V10/44 G06V10/82 G06V30/244 G06V30/28 |
| Y | * abstract * <br> * page 2, column 1, line 37 - line 39 * <br> * page 3, column 1, line 1 - line 8 * <br> * page 4, column 2, line 9 - line 25 * <br> * page 5, column 1, line 5 - line 6 * <br> * figure 2 * <br> * caption of figure 2 * <br> * equation 9 * | 8,9 | |
| Y | ZHU JUN-YAN ET AL: "Unpaired Image-to-Image Translation Using Cycle-Consistent Adversarial Networks", 2017 IEEE INTERNATIONAL CONFERENCE ON COMPUTER VISION (ICCV), IEEE, 22 October 2017 (2017-10-22), pages 2242-2251, XP033283087, DOI: 10.1109/ICCV.2017.244 [retrieved on 2017-12-22] <br> * title * <br> * page 2244, column 2, line 30 - page 2245, column 1, line 2 * <br> * page 2245, column 1, line 31 - line 34 * <br> * figure 3 * | 8,9 | |

TECHNICAL FIELDS SEARCHED (IPC)

G06V

The present search report has been drawn up for all claims

| Place of search | Date of completion of the search | Examiner |
|---|---|---|
| The Hague | 18 July 2022 | De Coi, Juri |

EPO FORM 1503 03.82 (P04C01)